# EUROPÄISCHE PATENTSCHRIFT

(11) **EP 3 482 471 B1**
(45) Veröffentlichungstag und Bekanntmachung des Hinweises auf die Patenterteilung: **19.05.2021**
(21) Anmeldenummer: 17736646.5
(22) Anmeldetag: 04.07.2017
(51) Int. Cl.: H02G 3/12, H01R 13/703, H01H 23/04

(54) **AUFNAHMEMODUL, FUNKTIONSMODUL SOWIE EIN ELEKTRISCHES/ELEKTRONISCHES INSTALLATIONSGERÄT**
RECEIVING MODULE, FUNCTIONAL MODULE AND AN ELECTRICAL/ELECTRONIC INSTALLATION DEVICE
MODULE DE RÉCEPTION, MODULE FONCTIONNEL ET APPAREIL D'INSTALLATION ÉLECTRIQUE/ÉLECTRONIQUE

(30) Priorität: 05.07.2016 DE 102016112321
(43) Veröffentlichungstag der Anmeldung: 15.05.2019
(73) Patentinhaber: Berker GmbH & Co. KG, 58579 Schalksmühle (DE)
(72) Erfinder: GRUSZENINKS, Johann, 76437 Rastatt (DE)
(74) Vertreter: Cabinet Nuss
(86) Internationale Anmeldenummer: PCT/EP2017/066645
(87) Internationale Veröffentlichungsnummer: WO 2018/007391

(56) Entgegenhaltungen:
- DE-A1- 19 710 416
- DE-A1-102009 037 751
- US-A- 4 317 969
- US-A1- 2013 337 673
- US-B1- 6 183 264
- US-B1- 9 036 320

## Beschreibung

Die Erfindung betrifft ein Aufnahmemodul zur Aufnahme eines Funktionsmoduls, ein Funktionsmodul zur Aufnahme in einem Aufnahmemodul und ein elektrisches/elektronisches Installationsgerät umfassend ein solches Aufnahmemodul und ein solches Funktionsmodul. Elektrische/elektronische Installationsgeräte sind in der Regel dafür vorgesehen, in sogenannte Installationsdosen beziehungsweise Unterputzdosen montiert zu werden. Diese Montage wird in aller Regel durch einen Elektroinstallateur durchgeführt. Bei der Montage des elektrischen/elektronischen Installationsgeräts wird dieses in aller Regel mit Leitungen eines Leitungsnetzes der Elektroinstallation angeschlossen, bevor das Gerät in der Installationsdose montiert wird. Wünscht nun ein Benutzer den Funktionsumfang dieses Gerätes zu erweitern oder dessen Funktionen durch andere zu ersetzen, so ist in der Regel ein kompletter Ausbau des elektrischen/elektronischen Installationsgeräts aus der Installationsdose erforderlich, um anschließend ein anderes Installationsgerät in die Installationsdose einzubauen. Diese Installation kann in der Regel nur durch einen Installateur erfolgen.

Aus der US 4 317 969 A ist eine Anschlussvorrichtung mit einem Schaltelement bekannt.

Es ist die Aufgabe der vorliegenden Erfindung, ein elektrisches/elektronisches Installationsgerät bereit zu stellen, welches in einfacher Weise im Funktionsumfang erweitert werden kann, beziehungsweise dessen Funktionen in einfacher Weise durch andere Funktionen ersetzt werden können.

Erfindungsgemäß wird die Aufgabe durch ein elektrisches/elektronisches Installationsgerät nach Anspruch 1 gelöst, welches ein Aufnahmemodul und ein Funktionsmodul umfasst, wobei das Funktionsmodul in dem Aufnahmemodul aufgenommen ist. Das Aufnahmemodul ist geeignet, in einer Installationsdose festgelegt zu werden. Das Aufnahmemodul umfasst ein erstes Schaltelement, eine Anschlussvorrichtung, einen ersten Pol, einen zweiten Pol und ein erstes Gehäuse. Das Gehäuse bildet einen Aufnahmeraum zur Aufnahme des Funktionsmoduls. In dem ersten Gehäuse sind das erste Schaltelement und die Anschlussvorrichtung angeordnet. Die Anschlussvorrichtung umfasst wenigstens zwei Anschlusseinrichtungen zum jeweiligen Anschluss eines Leiters einer Elektroinstallation, nämlich eine erste Anschlusseinrichtung und eine zweite Anschlusseinrichtung. Das erste Schaltelement ist einerseits mit dem ersten Pol und andererseits mit der ersten Anschlusseinrichtung elektrisch leitend verbunden. Der zweite Pol ist mit der zweiten Anschlusseinrichtung verbunden. Der erste Pol und der zweite Pol sind derart ausgebildet und angeordnet, dass ein an dem in dem Aufnahmeraum aufgenommenen Funktionsmodul angeordnetes elektrisches Anschlusselement mit dem ersten Pol und dem zweiten Pol elektrisch leitend verbindbar ist.

Das Aufnahmemodul ermöglicht es, in einfacher Weise ein darin aufgenommenes Funktionsmodul auszutauschen und somit andere oder erweiterte Funktionen einem Benutzer bereit zu stellen. Dadurch kann ein aufwändiger Ausbau und Wiedereinbau des Gerätes in die Installationsdose unterbleiben.

Vorzugsweise kann ein mit dem ersten Pol und dem zweiten Pol verbindbares zweites Schaltelement des Funktionsmoduls in Reihe mit dem ersten Schaltelement angeschlossen werden.

In einer bevorzugten Ausgestaltung ist der erste Pol unmittelbar mittels eines ersten elektrischen Leiters mit dem ersten Schaltelement verbunden. Unmittelbar mittels des ersten elektrischen Leiters verbunden bedeutet in diesem Zusammenhang, dass der erste Pol ohne Zwischenschaltung eines weiteren elektrischen Funktionsteils mit dem ersten Schaltelement verbunden ist.

Vorzugsweise ist der zweite Pol unmittelbar mittels eines zweiten elektrischen Leiters mit der zweiten Anschlusseinrichtung verbunden. Unmittelbar mittels des zweiten elektrischen Leiters verbunden bedeutet in diesem Zusammenhang, dass der zweite Pol ohne Zwischenschaltung eines weiteren elektrischen Funktionsteils mit der zweiten Anschlusseinrichtung verbunden ist.

Vorzugsweise sind die Anschlusseinrichtungen als Klemme ausgebildet und weiterhin vorzugsweise von einer Außenseite des ersten Gehäuses her zugänglich.

Durch diese Ausgestaltung kann das Aufnahmemodul in einfacher Weise mit den Leitern der Elektroinstallation vor dem Einbau in die Installationsdose verbunden werden.

In einer bevorzugten Ausgestaltung ist die Klemme eine aus der europäischen Patentanmeldung EP 2 947 718 A1 bekannt gewordene Klemme.

Diese Ausgestaltung vereinfacht weiterhin das Verbinden der Leiter mit dem Aufnahmemodul.

Vorzugweise ist das erste Schaltelement ein mechanischer Schalter.

Diese Ausgestaltung ermöglicht es, in einfacher Weise durch Öffnen des Schalters eine galvanische Trennung zwischen dem in dem Aufnahmeraum aufgenommenen Funktionsmodul und/oder einem mit dem Installationsgerät in Reihe geschaltetem Gerät und/oder einer Stromversorgung der Elektroinstallation und/oder der Elektroinstallation selbst herzustellen.

Vorzugsweise ist das Aufnahmemodul ausgebildet, um das Funktionsmodul durch eine Bewegung in einer Einbaurichtung in eine Einbauposition zu überführen, in welcher das Funktionsmodul in dem Aufnahmemodul aufgenommen ist.

In einer bevorzugten Ausgestaltung umfasst das erste Gehäuse eine Vertiefung, die in den Aufnahmeraum mündet, wobei der erste Pol und/oder der zweite Pol in der Vertiefung angeordnet sind, wobei vorzugsweise sich die Vertiefung im Wesentlichen in einer Einbaurichtung des Funktionsmoduls erstreckt.

Diese Ausgestaltung ermöglicht es, die Gefahr eines versehentlichen Berührens des ersten Pols oder des zweiten Pols und somit die Gefahr eines Stromschlags zu reduzieren.

Vorzugsweise ist der erste Pol in einer ersten Vertiefung angeordnet und der zweite Pol in einer zweiten Vertiefung angeordnet. Alternativ kann der erste Pol und der zweite Pol in derselben Vertiefung angeordnet sein.

Vorzugsweise erstreckt sich die Vertiefung und/oder die erste Vertiefung und/oder die zweite Vertiefung im Wesentlichen in Einbaurichtung.

In einer bevorzugten Ausgestaltung ist der erste Pol und/oder der zweite Pol als Kontaktzunge ausgebildet, die sich vorzugsweise entlang der Vertiefung erstreckt.

Alternativ kann der erste Pol und/oder der zweite Pol als Buchse ausgebildet sein. Vorzugsweise weist die Buchse einen rechteckigen oder quadratischen Querschnitt auf.

Vorzugsweise erstreckt sich die Kontaktzunge und/oder die Buchse im Wesentlichen in Einbaurichtung.

Vorzugsweise ist die Kontaktzunge und/oder die Buchse aus einem Blechstanzteil gebildet.

In einer bevorzugten Ausgestaltung umfasst das erste Gehäuse ferner ein erstes Rastmittel zum Festlegen des Funktionsmoduls in dem Aufnahmeraum, wobei vorzugsweise das erste Rastmittel geeignet ist, das Funktionsmodul formschlüssig in dem Aufnahmeraum zu halten, weiterhin vorzugsweise mittels einer Clipsverbindung.

Diese Ausgestaltung ermöglicht es, das Funktionsmodul in dem Aufnahmemodul zu halten und zugleich ein einfaches Austauschen des Funktionsmoduls zu ermöglichen. Ferner kann durch diese Ausgestaltung mittels akustischer und/oder haptischer Rückmeldung in einfacher Weise festgestellt werden, ob das Funktionsmodul eine Einbauposition erreicht hat.

Erfindungsgemäß umfasst das erste Schaltelement ein Betätigungselement, welches derart angeordnet und ausgebildet ist, dass das Betätigungselement durch ein an dem in dem Aufnahmeraum aufgenommenen Funktionsmodul angeordnetes Betätigungsglied betätigbar ist.

Diese Ausgestaltung ermöglicht es, den Stromverbrauch bei ausgeschaltetem Installationsgerät zu unterbinden.

In einer bevorzugten Ausgestaltung ist das Betätigungselement durch eine Linearbewegung, vorzugsweise durch eine Linearbewegung in Einbaurichtung betätigbar.

In einer bevorzugten Ausgestaltung umfasst das Aufnahmemodul einen Aktor, der angeordnet und ausgebildet ist, um das erste Schaltelement anhand eines Steuerungssignals zu öffnen und/oder zu schließen. Vorzugsweise ist der Aktor ein mechanischer Antrieb, der ausgebildet ist, anhand eines Steuersignals das erste Schaltelement zu öffnen und/oder zu schließen.

Diese Ausgestaltung ermöglicht es, das Installationsgerät und/oder ein mit dem Installationsgerät in Reihe geschaltetes Gerät mittels eines Steuersignals aus der Ferne ein- und/oder auszuschalten.

Die Erfindung betrifft ferner ein Funktionsmodul zur Aufnahme in einem erfindungsgemäßen Aufnahmemodul. Das Funktionsmodul umfasst ein zweites Gehäuse und ein elektrisches Anschlusselement, wobei das elektrische Anschlusselement derart an dem Gehäuse angeordnet ist, dass das elektrische Anschlusselement mit dem ersten Pol und dem zweiten Pol verbindbar ist, wenn das Funktionsmodul in dem Aufnahmemodul aufgenommen ist.

Diese Ausgestaltung ermöglicht ein einfaches Installieren eines Funktionsmoduls in einem Aufnahmemodul.

In einer bevorzugten Ausgestaltung umfasst das elektrische Anschlusselement einen dritten Pol und einen vierten Pol. Vorzugsweise erstrecken sich der dritte Pol und der vierte Pol annähernd in einer Einbaurichtung des Funktionsmoduls. Weiterhin vorzugsweise erstrecken sich der dritte Pol und der vierte Pol von dem zweiten Gehäuse weg.

Diese Ausgestaltung vereinfacht weiterhin das Installieren des Funktionsmoduls in dem Aufnahmemodul.

In einer bevorzugten Ausgestaltung umfasst das zweite Gehäuse ein zweites Rastmittel, welches mit dem ersten Rastmittel zusammenwirkt, um das Funktionsmodul in dem Aufnahmemodul zu halten, vorzugsweise mittels Formschluss

Diese Ausgestaltung ermöglicht es, das Funktionsmodul in dem Aufnahmemodul zu halten und zugleich ein einfaches Austauschen des Funktionsmoduls zu ermöglichen. Ferner kann durch diese Ausgestaltung mittels akustischer und/oder haptischer Rückmeldung in einfacher Weise festgestellt werden, ob das Funktionsmodul eine Einbauposition erreicht hat.

Erfindungsgemäß umfasst das Funktionsmodul ein Betätigungsglied, welches geeignet ist, das Betätigungselement zu betätigen, wenn das Funktionsmodul in dem Aufnahmemodul aufgenommen ist.

Diese Ausgestaltung ermöglicht ein Öffnen und Schließen des ersten Schaltelements des Aufnahmemoduls durch das Funktionsmodul.

In einer bevorzugten Ausgestaltung umfasst das Funktionsmodul ein Eingabeelement, das derart ausgebildet ist, dass das Eingabeelement bei einer Betätigung durch einen Benutzer auf das Betätigungsglied einwirkt, um das Betätigungselement zu betätigen, wobei vorzugsweise das Betätigungsglied starr mit dem Eingabeelement verbunden ist, weiterhin vorzugsweise das Betätigungsglied einstückig mit dem Eingabeelement ausgebildet ist.

Durch diese Ausgestaltung wird dem Benutzer ermöglicht, ein durch das Funktionsmodul und das Aufnahmemodul gebildetes Installationsgerät und/oder ein mit dem Installationsgerät in Reihe geschaltetes Gerät durch eine Betätigung des Eingabeelements ein- beziehungsweise auszuschalten, wobei bei einem ausgeschaltetem Installationsgerät beziehungsweise Gerät der Stromverbrauch unterbunden wird.

Vorzugsweise ist das Eingabeelement als Wippe oder als Drucktaste, vorzugsweise als Drucktaste mit translatorischem Freiheitsgrad ausgebildet.

In einer bevorzugten Ausgestaltung umfasst das Funktionsmodul eine Kontaktbrücke, die den dritten Pol mit dem vierten Pol elektrisch leitend miteinander verbindet. Gemäß dieser Ausgestaltung kann das aus dem Funktionsmodul und dem Aufnahmemodul gebildete elektrische/elektronische Installationsgerät ein Ein-/Ausschalter, beispielsweise ein Lichtschalter sein.

Vorzugsweise umfasst das Funktionsmodul ein zweites Schaltelement, das mit dem dritten Pol und dem vierten Pol elektrisch leitend verbunden ist.

Weiterhin vorzugsweise ist das zweite Schaltelement einerseits unmittelbar mittels eines elektrischen Leiterelements mit dem dritten Pol verbunden und andererseits unmittelbar mittels eines weiteren elektrischen Leiterelements mit dem vierten Pol verbunden.

Durch diese Ausgestaltung wird ermöglicht, dass das zweite Schaltelement durch Öffnen des ersten Schaltelements galvanisch von der restlichen Elektroinstallation getrennt werden kann.

In einer bevorzugten Ausgestaltung ist das zweite Schaltelement ein elektromechanisches Schaltelement, vorzugsweise ein Relais.

Diese Ausgestaltung ermöglicht, beispielsweise ein Funktionsmodul bereit zu stellen, welches zusätzlich zu der Funktion des Ein- und Ausschaltens, welche durch das erste Schaltelement erzielt wird, weitere Funktionen bereitstellt, wie beispielsweise Dimmen einer Lichtquelle, eine Zeitschaltfunktion, usw.

In einer bevorzugten Ausgestaltung umfasst das Funktionsmodul ferner einen mechanisch betätigbaren Schalter, vorzugsweise einen Mikroschalter, der ausgebildet und angeordnet ist, um durch das Eingabeelement betätigt zu werden. Weiterhin vorzugsweise dient der mechanisch betätigbare Schalter zur Steuerung des zweiten Schaltelements.

Vorzugsweise ist das Eingabeelement ausgebildet, wenigstens eine Ruhestellung, eine erste Eingabestellung und eine zweite Eingabestellung einzunehmen. Weiterhin vorzugsweise ist das Eingabeelement ausgebildet, das zweite Schaltelement in der ersten Eingabestellung und das erste Schaltelement in der zweiten Eingabestellung zu betätigen.

In einer bevorzugten Ausgestaltung umfasst das Eingabeelement ferner ein Rückstellmittel, welches geeignet ist, das Eingabeelement von der ersten Eingabestellung oder der zweiten Eingabestellung in die Ruhestellung zu überführen. Das Rückstellmittel kann als Feder ausgebildet sein, beispielsweise als Biegefeder, Torsionsfeder, Druckfeder, Zugfeder, Blattfeder, Schenkelfeder, Gummifeder, Luftfeder, Gasdruckfeder, etc.

Die Erfindung betrifft ein elektrisches/elektronisches Installationsgerät, welches ein erfindungsgemäßes Aufnahmemodul und ein erfindungsgemäßes Funktionsmodul umfasst, wobei das Funktionsmodul in dem Aufnahmemodul aufgenommen ist.

Einzelheiten und weitere Vorteile des erfindungsgemäßen Aufnahmemoduls, des erfindungsgemäßen Funktionsmoduls und des erfindungsgemäßen elektrischen/elektronischen Installationsgeräts werden anhand des nachfolgend beschriebenen Ausführungsbeispiels erläutert. Dabei veranschaulichen im Einzelnen:
Fig. 1 zeigt eine perspektivische Schnittansicht in Explosionsdarstellung eines elektrischen/elektronischen Installationsgeräts nach einem Ausführungsbeispiel;
Fig. 2 zeigt eine perspektivische Schnittansicht des elektrischen/elektronischen Installationsgeräts nach dem Ausführungsbeispiel;
Fig. 3 zeigt eine perspektivische Schnittansicht in Explosionsdarstellung des in eine Installationsdose eingebauten elektrischen/elektronischen Installationsgeräts nach dem Ausführungsbeispiel;
Fig. 4 zeigt eine weitere perspektivische Schnittansicht des elektrischen/elektronischen Installationsgeräts nach dem Ausführungsbeispiel;
Fig. 5 bis 7 zeigen ein Funktionsmodul des elektrischen/elektronischen Installationsgeräts nach dem Ausführungsbeispiel in einer Schnittansicht;
Fig. 8 zeigt eine Schnittansicht des elektrischen/elektronischen Installationsgeräts nach dem Ausführungsbeispiel;
Fig. 9 zeigt eine perspektivische Ansicht des Installationsgeräts nach dem Ausführungsbeispiel in Explosionsdarstellung.

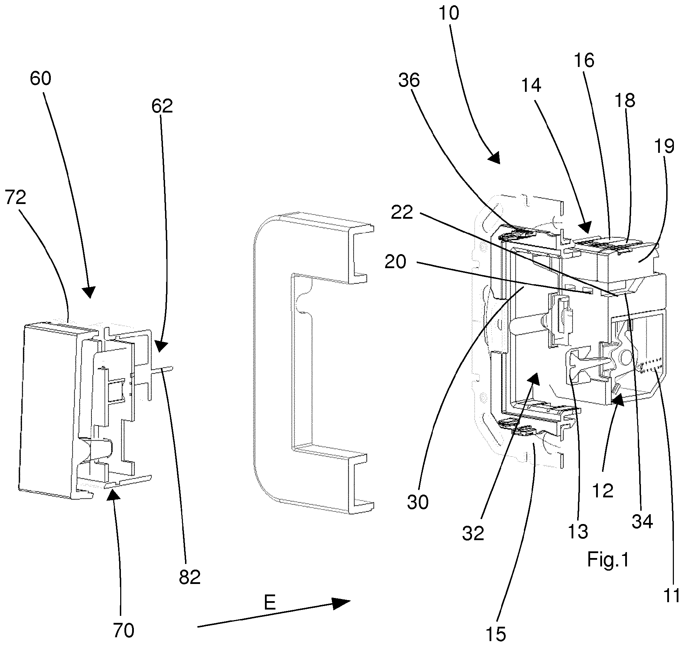

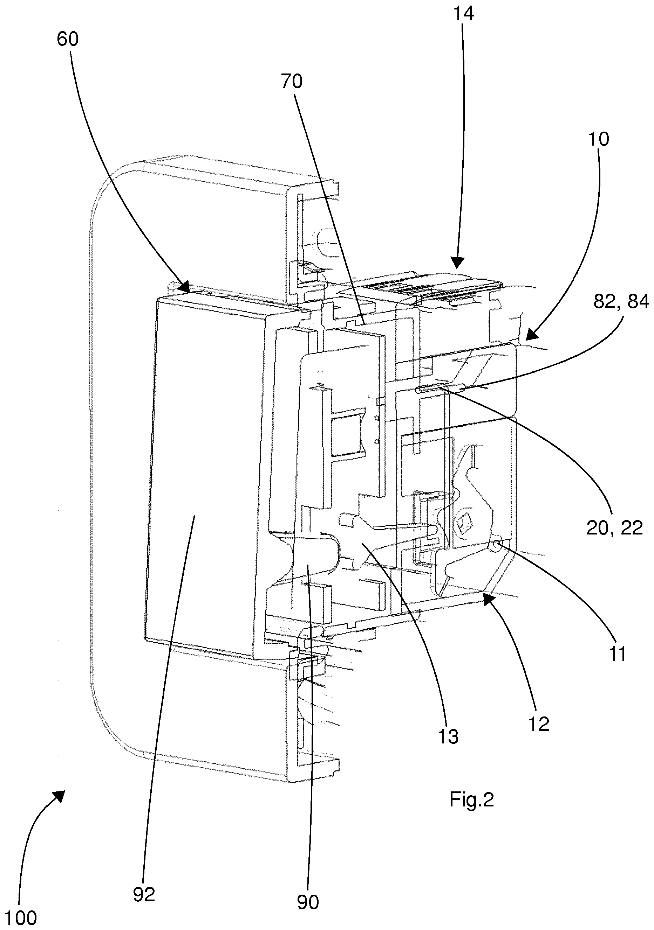

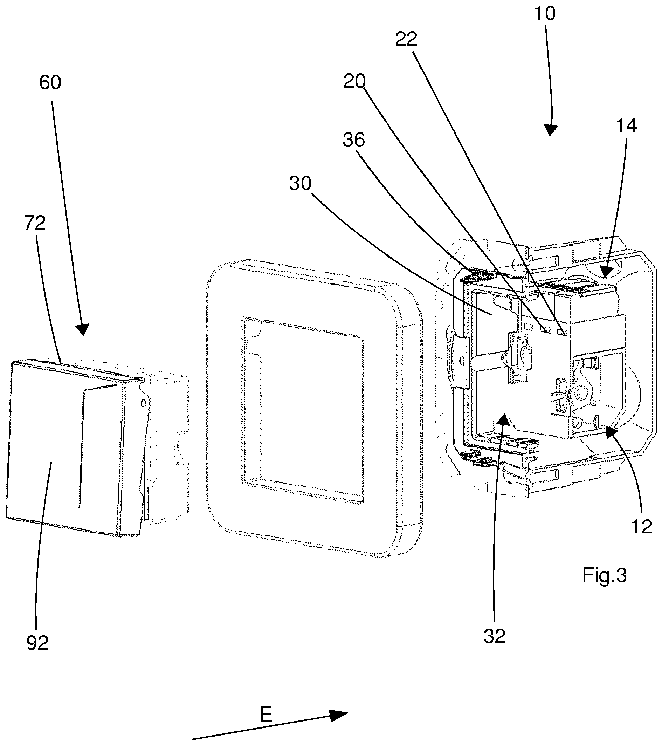

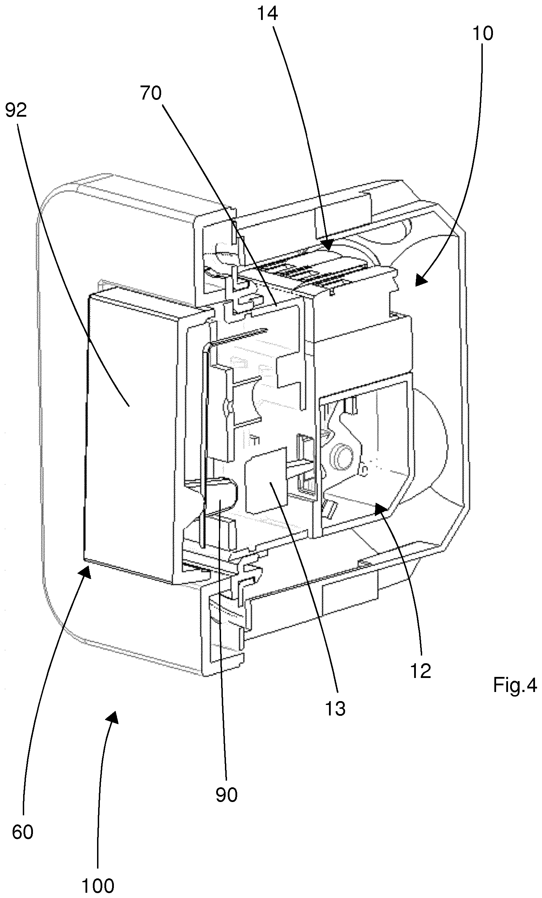

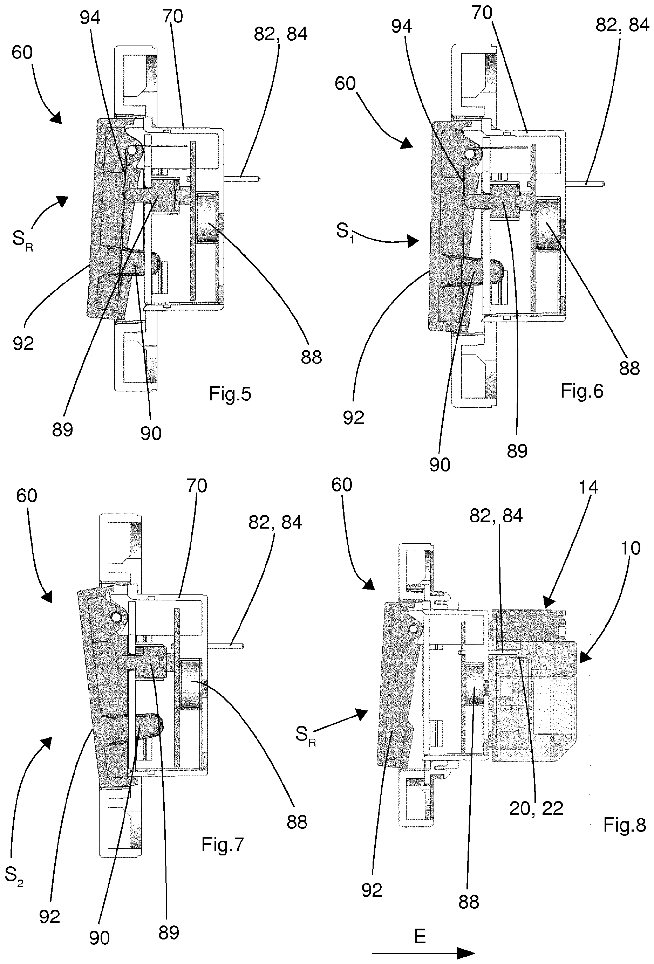

Die Figuren 1 bis 4, 8 und 9 zeigen ein elektrisches/elektronisches Installationsgerät 100 nach dem Ausführungsbeispiel. Das Installationsgerät umfasst ein Aufnahmemodul 10 und ein Funktionsmodul 60. Das Aufnahmemodul 10 ist geeignet, in einer Installationsdose 200 festgelegt zu werden. Das Aufnahmemodul 10 umfasst ein erstes Gehäuse 30. In dem Gehäuse 30 sind ein erstes Schaltelement 12 und eine Anschlussvorrichtung 14 angeordnet.

Die Anschlussvorrichtung 14 umfasst wenigstens zwei Anschlusseinrichtungen 16, 18, 19 zum jeweiligen Anschluss eines Leiters einer Elektroinstallation. Gemäß dem Ausführungsbeispiel umfasst die Anschlussvorrichtung 14 eine erste Anschlusseinrichtung 16 und eine zweite Anschlusseinrichtung 18. Die Anschlussvorrichtung 14 kann ferner eine dritte Anschlusseinrichtung 19 und/oder weitere Anschlusseinrichtungen umfassen.

Das Aufnahmemodul 10 umfasst ferner einen ersten Pol 20 und einen zweiten Pol 22, die in dem ersten Gehäuse 30 angeordnet sind. Das erste Gehäuse 30 bildet ferner einen Aufnahmeraum 32, in welchem das Funktionsmodul 60 zumindest teilweise aufgenommen ist.

Das erste Schaltelement 12 ist einerseits mit dem ersten Pol 20 und andererseits mit der ersten Anschlusseinrichtung 16 elektrisch leitend verbunden. Der zweite Pol 22 ist mit der zweiten Anschlusseinrichtung 18 verbunden.

In einem zusammengebauten Zustand des elektrischen/elektronischen Installationsgeräts 100 sind der erste Pol 20 und der zweite Pol 22 mit einem elektrischen Anschlusselement 62 des Funktionsmoduls 60 elektrisch leitend verbunden.

Vorzugsweise kann ein mit dem ersten Pol 20 und dem zweiten Pol 22 verbindbares zweites Schaltelement 88 des Funktionsmoduls 60 in Reihe mit dem ersten Schaltelement 12 angeschlossen werden.

In einer bevorzugten Ausgestaltung ist der erste Pol 20 unmittelbar mittels eines ersten elektrischen Leiters mit dem ersten Schaltelement 12 verbunden. Unmittelbar mittels des ersten elektrischen Leiters verbunden bedeutet in diesem Zusammenhang, dass der erste Pol 20 ohne Zwischenschaltung eines weiteren elektrischen Funktionsteils mit dem ersten Schaltelement 12 verbunden ist.

Vorzugsweise ist der zweite Pol 22 unmittelbar mittels eines zweiten elektrischen Leiters mit der zweiten Anschlusseinrichtung 18 verbunden. Unmittelbar mittels des zweiten elektrischen Leiters verbunden bedeutet in diesem Zusammenhang, dass der zweite Pol 22 ohne Zwischenschaltung eines weiteren elektrischen Funktionsteils mit der zweiten Anschlusseinrichtung 18 verbunden ist.

Das Aufnahmemodul 10 kann ferner einen Montagerahmen 15 umfassen, welcher insbesondere zur Befestigung des Aufnahmemoduls 10 in der Montagedose 200 dient.

Das erste Gehäuse 30 kann ferner eine Aufnahmeöffnung 31 umfassen, in welche der Aufnahmeraum 32 mündet, und durch welche das Funktionsmodul 60 zumindest teilweise hindurch geführt wird, um das Funktionsmodul 60 in dem Aufnahmemodul 10 aufzunehmen. Vorzugsweise erstrecken sich der Montagerahmen 15 und die Aufnahmeöffnung 31 im Wesentlichen in einer selben Ebene.

Das Funktionsmodul 60 kann mit dem Aufnahmemodul 10 verbunden werden, in dem das Funktionsmodul 60 in einer Einbaurichtung E durch die Aufnahmeöffnung 31 hindurch in dem Aufnahmeraum 32 geführt wird.

Wie insbesondere die Figuren 1 bis 4 zu erkennen geben, sind das Schaltelement 12, die Anschlussvorrichtung 14, der erste Pol 20 und der zweite Pol 22 gegenüber der Ebene der Aufnahmeöffnung 31 in Einbaurichtung E zurückversetzt.

Wie insbesondere Figur 1 zu erkennen gibt, sind die Anschlusseinrichtungen 16, 18, 19 von einer Außenseite der ersten Gehäuses 30 her zugänglich. Die Anschlusseinrichtungen 16, 18, 19 können als Klemmelemente ausgebildet sein.

Das elektrische/elektronische Installationsgerät 100 bietet den Vorteil, dass ein Benutzer, der ein Laie sein kann, in einfacher Weise ein Installationsmodul 60 durch ein anderes Installationsmodul 60 austauschen kann, ohne Zuhilfenahme eines Installateurs. Dadurch können in einfacher Weise andere oder zusätzliche Funktionen des elektrischen/elektronischen Installationsgeräts 100 bereitgestellt werden.

Vorzugsweise ist das erste Schaltelement 12 ein mechanischer Schalter, mittels welchem eine galvanische Trennung beispielsweise zwischen dem elektrischen/elektronischen Installationsgerät 100 und einer Stromquelle der Elektroinstallation herstellbar ist.

Das erste Schaltelement 12 kann beispielsweise ein mechanischer Schalter mit einem Eingang und einem Ausgang sein oder ein mechanischer Schalter mit zwei Eingängen und einem Ausgang sein. Ist das erste Schaltelement 12 ein mechanischer Schalter mit zwei Eingängen und einem Ausgang, so kann das erste Schaltelement 12 beispielsweise zum Ein- und Ausschalten sowie zum Umpolen eines eine Jalousie antreibenden Elektromotors dienen.

Das erste Gehäuse 30 kann eine Vertiefung 34 umfassen, die in den Aufnahmeraum 32 mündet, und in welchem der erste Pol 20 und/oder der zweite Pol 22 angeordnet sind. Gemäß dem Ausführungsbeispiel ist jeweils jeder der Pole 20, 22 des Aufnahmemoduls 10 in einer eigenen Vertiefung 34 aufgenommen. Die Vertiefung 34 und/oder der erste Pol 20 und/oder der zweite Pol 22 erstrecken sich dabei im Wesentlichen in Einbaurichtung E.

Die Pole 20, 22 des Aufnahmemoduls 10 sind gemäß dem Ausführungsbeispiel zungenförmig ausgebildet. Dabei kann jeder Pol 20, 22 des Aufnahmemoduls 10 an einer Wandung der Vertiefung 34 anliegen. Das Funktionsmodul 60 umfasst ein zweites Gehäuse 70 und ein elektrisches Anschlusselement 80, welches im zusammengebauten Zustand des elektrischen/elektronischen Installationsgeräts 100 mit dem ersten Pol 20 und dem zweiten Pol 22 verbunden ist.

Das Anschlusselement 80 kann einen dritten Pol 82 und einen vierten Pol 84 umfassen, die sich vorzugsweise ebenfalls annähernd in Einbaurichtung E erstrecken. Weiterhin vorzugsweise stehen die Pole 82, 84 des Funktionsmoduls 60 von dem zweiten Gehäuse 70 in Einbaurichtung E vor.

In dem zusammengebauten Zustand ist der erste Pol 20 mit dem dritten Pol 82 elektrisch leitend verbunden und der zweite Pol 22 ist mit dem vierten Pol 84 elektrisch leitend verbunden.

Das Funktionsmodul 60 umfasst ein Betätigungsglied 90, welches geeignet ist, das Betätigungselement 13 im zusammengebauten Zustand des elektrischen/elektronischen Installationsgeräts 100 zu betätigen. Das Funktionsmodul 60 kann dabei ferner ein Eingabeelement 92 umfassen, das bei Betätigung durch einen Benutzer derart auf das Betätigungsglied 90 einwirkt, dass das Betätigungselement 13 betätigt wird. So kann das Betätigungsglied 90 starr mit dem Eingabeelement 92 verbunden sein oder einstückig mit diesem ausgebildet sein.

In einem nicht in den Figuren wiedergegebenen Ausführungsbeispiel kann eine Kontaktbrücke zwischen dem dritten Pol 82 und dem vierten Pol 84 angeordnet sein und in Reihe geschaltet sein. Damit wird gewährleistet, dass ein durch eine Stromquelle, die in der Elektroinstallation angeordnet ist, und das erste Schaltelement 12 gebildeter Stromkreis hergestellt werden kann. Gemäß dieser Ausgestaltung kann das Funktionsmodul 60 ausgebildet sein, damit das elektrische/elektronische Installationsgerät 100 einen einfachen Ein-/Ausschalter bildet. Dieser Ein-/Ausschalter ist im Wesentlichen durch das Eingabeelement 92 des Funktionsmoduls 60 gebildet, welches über das Betätigungselement 13 auf das erste Schaltelement 12 einwirkt.

In dem Ausführungsbeispiel gemäß den Figuren 1 bis 9 kann das Funktionsmodul 60 ein zweites Schaltelement 88 umfassen, das vorzugsweise als Relais ausgebildet ist und das im zusammengebauten Zustand den dritten Pol 80 mit dem vierten Pol 84 elektrisch leitend verbindet. Weiterhin vorzugsweise kann das zweite Schaltelement 88 einerseits unmittelbar mittels eines elektrischen Leiterelements mit dem dritten Pol 80 verbunden sein und andererseits unmittelbar mittels eines weiteren elektrischen Leiterelements mit dem vierten Pol 84 verbunden sein.

Gemäß dieser Ausgestaltung kann das Funktionsmodul 60 beispielsweise zusätzlich eine Dimmer-Funktion bereitstellen. Dabei kann das erste Schaltelement 12 zum Ein- und Ausschalten dienen und das zweite Schaltelement 88 zum Dimmen dienen, wobei sowohl das erste Schaltelement 12 als auch das zweite Schaltelement 88 mittels des Eingabeelements 92 gesteuert werden können. Hierzu kann das Eingabeelement eine Ruhestellung S_{R}, eine erste Eingabestellung S₁ und eine zweite Eingabestellung S₂ einnehmen. Demgemäß kann in der ersten Eingabestellung S₁ das zweite Schaltelement 88 betätigt werden und in der zweiten Eingabestellung S₂ das erste Schaltelement 12 betätigt werden. So kann, wenn ein Benutzer das Eingabeelement 92 nur derart leicht drückt, dass das Eingabeelement 92 die erste Eingabestellung S₁ einnimmt, beispielsweise ein Licht gedimmt werden, und wenn der Benutzer das Eingabeelement 92 derart stark drückt, dass das Eingabeelement die zweite Eingabestellung S₂ einnimmt, das Licht ein- oder ausschalten.

Das Funktionsmodul 60 kann einen Mikroschalter 89 umfassen, der angeordnet und ausgebildet ist, das zweite Schaltelement 88 zu steuern. Der Mikroschalter 89 kann in der ersten Eingabestellung S₁ das zweite Schaltelement 88 betätigen.

Das zweite Schaltelement 88 kann zusätzlich eine Kommunikationseinheit umfassen, mittels welcher das zweite Schaltelement 88 Steuerungsbefehle, die beispielsweise von einem mobilen Gerät, vorzugsweise einem Mobiltelefon stammen können, empfangen und in Schaltbefehle umgewandelt werden können.

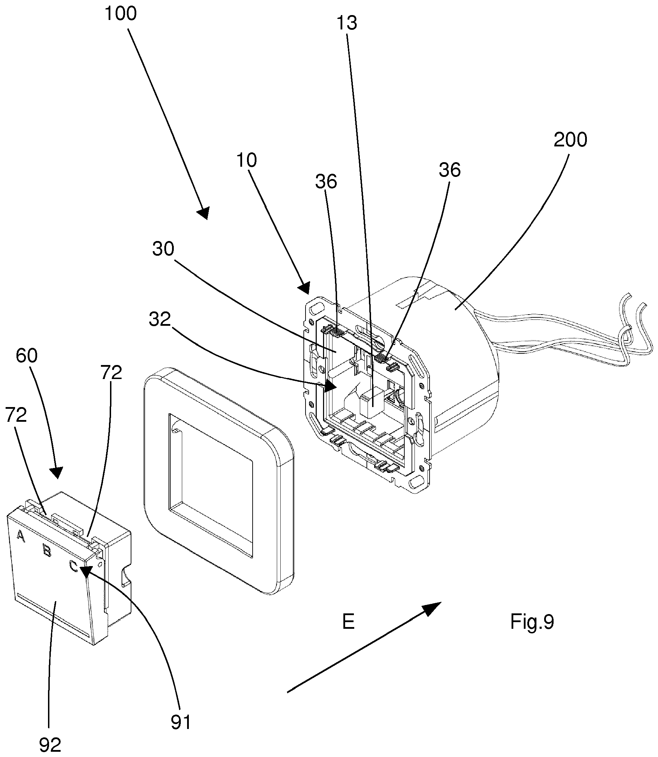

Fig. 9 zeigt ein elektrisches/elektronisches Installationsgerät 100 mit einem Funktionsmodul 60, welches zusätzlich zum Ein- und Ausschalten weitere Funktionen bereitstellt. Die weiteren Funktionen können wie zuvor beschrieben durch das zweite Schaltelement 88 bereitgestellt werden, wobei das zweite Schaltelement 88 durch einen zusätzlich an dem Eingabeelement 92 angebrachten berührungssensitiven Sensor 91 gesteuert werden kann.

Das Funktionsmodul 60 kann ferner ein Rückstellmittel 94 umfassen, welches geeignet ist, das Eingabeelement 92 von der ersten Eingabestellung oder der zweiten Eingabestellung in die Ruhestellung zu überführen, wenn ein Benutzer das Eingabeelement 92 los lässt.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Elektrisches/elektronisches Installationsgerät, umfassend ein Aufnahmemodul (10) und ein Funktionsmodul (60), wobei das Funktionsmodul (60) in dem Aufnahmemodul (10) aufgenommen ist,
wobei das Aufnahmemodul (10) geeignet ist, in einer Installationsdose festgelegt zu werden,
wobei das Aufnahmemodul (10) ein erstes Schaltelement (12), eine Anschlussvorrichtung (14), einen ersten Pol (20), einen zweiten Pol (22) und ein erstes Gehäuse (30) umfasst, welches einen Aufnahmeraum (32) bildet, in welchem das Funktionsmodul (60) aufgenommen ist,
wobei das erste Schaltelement (12) und die Anschlussvorrichtung (14) in dem ersten Gehäuse (30) angeordnet sind,
wobei die Anschlussvorrichtung (14) wenigstens zwei Anschlusseinrichtungen (16, 18, 19) zum jeweiligen Anschluss eines Leiters einer Elektroinstallation umfasst, nämlich wenigstens eine erste Anschlusseinrichtung (16) und eine zweite Anschlusseinrichtung (18),
wobei das erste Schaltelement (12) einerseits mit dem ersten Pol (20) und andererseits mit der ersten Anschlusseinrichtung (16) elektrisch leitend verbunden ist,
wobei der zweite Pol (22) mit der zweiten Anschlusseinrichtung (18) verbunden ist,
wobei das Funktionsmodul (60) ein zweites Gehäuse (70) und ein an dem zweiten Gehäuse (70) angeordnetes elektrisches Anschlusselement (62) umfasst,
wobei das elektrische Anschlusselement (62) mit dem ersten Pol (20) und dem zweiten Pol (22) verbunden ist,
wobei der erste Pol (20) und der zweite Pol (22) derart ausgebildet und angeordnet sind, dass das elektrische Anschlusselement (62) mit dem ersten Pol (20) und dem zweiten Pol (22) elektrisch leitend verbunden ist, und
wobei das erste Schaltelement (12) ein Betätigungselement (13) umfasst, welches derart angeordnet und ausgebildet ist, dass es durch ein an dem Funktionsmodul (60) angeordnetes Betätigungsglied (90) betätigbar ist.

2. Elektrisches/elektronisches Installationsgerät nach Anspruch 1, **dadurch gekennzeichnet, dass** das erste Schaltelement (12) ein mechanischer Schalter ist.

3. Elektrisches/elektronisches Installationsgerät nach einem der Ansprüche 1 oder 2, **dadurch gekennzeichnet, dass** das erste Gehäuse (30) eine Vertiefung (34) umfasst, die in den Aufnahmeraum (32) mündet, wobei der erste Pol (20) und/oder der zweite Pol (22) in der Vertiefung (34) angeordnet sind, wobei vorzugsweise sich die Vertiefung (34) im Wesentlichen in einer Einbaurichtung (E) des Funktionsmoduls (60) erstreckt.

4. Elektrisches/elektronisches Installationsgerät nach einem der Ansprüche 1 bis 3, **dadurch gekennzeichnet, dass** das erste Gehäuse (30) ferner ein erstes Rastmittel (36) zum Festlegen des Funktionsmoduls (60) in dem Aufnahmeraum (32) umfasst, wobei vorzugsweise das erste Rastmittel (36) das Funktionsmodul (60) formschlüssig in dem Aufnahmeraum (32) hält.

5. Elektrisches/elektronisches Installationsgerät nach einem der Ansprüche 1 bis 4, **dadurch gekennzeichnet, dass** das Aufnahmemodul (10) einen Aktor (11) umfasst, der angeordnet und ausgebildet ist, um das erste Schaltelement (12) anhand eines Steuerungssignals zu öffnen und/oder zu schließen.

6. Elektrisches/elektronisches Installationsgerät nach einem der Ansprüche 1 bis 5, **dadurch gekennzeichnet, dass** das elektrische Anschlusselement (62) einen dritten Pol (82) und einen vierten Pol (84) umfasst, die sich jeweils annähernd in einer Einbaurichtung (E) des Funktionsmoduls (60) erstrecken, vorzugsweise von dem zweiten Gehäuse (70) weg erstrecken.

7. Elektrisches/elektronisches Installationsgerät nach Anspruch 4, **dadurch gekennzeichnet, dass** das zweite Gehäuse (70) ein zweites Rastmittel (72) umfasst, welches mit dem ersten Rastmittel (36) zusammenwirkt, um das Funktionsmodul (60) in dem Aufnahmemodul (10) zu halten, vorzugsweise mittels Formschluss.

8. Elektrisches/elektronisches Installationsgerät nach einem der Ansprüche 1 bis 7, **dadurch gekennzeichnet, dass** das Funktionsmodul (60) ein Eingabeelement (92) umfasst, das derart ausgebildet ist, dass das Eingabeelement (92) bei einer Betätigung durch einen Benutzer auf das Betätigungsglied (90) einwirkt, um das Betätigungselement (13) zu betätigen, wobei vorzugsweise das Betätigungsglied (90) starr mit dem Eingabeelement (92) verbunden ist, weiterhin vorzugsweise das Betätigungsglied (90) einstückig mit dem Eingabeelement (92) ausgebildet ist.

9. Elektrisches/elektronisches Installationsgerät nach Anspruch 6, **dadurch gekennzeichnet, dass** das Funktionsmodul (60) eine Kontaktbrücke umfasst, die den dritten Pol (82) mit dem vierten Pol (84) elektrisch leitend verbindet.

10. Elektrisches/elektronisches Installationsgerät nach Anspruch 6, **dadurch gekennzeichnet, dass** das Funktionsmodul (60) ein zweites Schaltelement (88) umfasst, das mit dem dritten Pol (82) und dem vierten Pol (84) elektrisch leitend verbunden ist.

11. Elektrisches/elektronisches Installationsgerät nach Anspruch 10, **dadurch gekennzeichnet, dass** das zweite Schaltelement (88) ein elektromechanisches Schaltelement, vorzugsweise ein Relais ist.

## Claims

1. Electrical/electronic installation device, comprising a receiving module (10) and a functional module (60), wherein the functional module (60) is received in the receiving module (10),
wherein the receiving module (10) is suitable for being fixed in an installation box,
wherein the receiving module (10) comprises a first switching element (12), a connection apparatus (14), a first pole (20), the second pole (22) and a first housing (30), which forms a receiving space (32) in which the functional module (60) is received,
wherein the first switching element (12) and the connection apparatus (14) are arranged in the first housing (30),
wherein the connection apparatus (14) comprises at least two connection devices (16, 18, 19) for respectively connecting a conductor of an electrical installation, namely at least one first connection device (16) and one second connection device (18), wherein the first switching element (12) is electrically conductively connected on the one hand to the first pole (20) and on the other hand to the first connection device (16),
wherein the second pole (22) is connected to the second connection device (18),
wherein the functional module (60) comprises a second housing (70) and an electrical connection element (62) arranged on the second housing (70),
wherein the electrical connection element (62) is connected to the first pole (20) and the second pole (22),
wherein the first pole (20) and the second pole (22) are designed and arranged in such a way that the electrical connection element (62) is electrically conductively connected to the first pole (20) and the second pole (22), and
wherein the first switching element (12) comprises an actuating element (13), which is arranged and designed in such a way that it can be actuated by an actuating member (90) arranged on the functional module (60).

2. Electrical/electronic installation device according to Claim 1, **characterized in that** the first switching element (12) is a mechanical switch.

3. Electrical/electronic installation device according to one of Claims 1 or 2, **characterized in that** the first housing (30) comprises a recess (34), which opens into the receiving space (32), wherein the first pole (20) and/or the second pole (22) are arranged in the recess (34), wherein the recess (34) preferably extends substantially in a mounting direction (E) of the functional module (60).

4. Electrical/electronic installation device according to one of Claims 1 to 3, **characterized in that** the first housing (30) further comprises a first latching means (36) for fixing the functional module (60) in the receiving space (32), wherein the first latching means (36) preferably holds the functional module (60) in the receiving space (32) in a form-fitting manner.

5. Electrical/electronic installation device according to one of Claims 1 to 4, **characterized in that** the receiving module (10) comprises an actuator (11), which is designed and arranged to open and/or to close the first switching element (12) based on a control signal.

6. Electrical/electronic installation device according to one of Claims 1 to 5, **characterized in that** the electrical connection element (62) comprises a third pole (82) and a fourth pole (84), which each extend approximately in a mounting direction (E) of the functional module (60), preferably extend away from the second housing (70).

7. Electrical/electronic installation device according to Claim 4, **characterized in that** the second housing (70) comprises a second latching means (72), which interacts with the first latching means (36) in order to hold the functional module (60) in the receiving module (10), preferably by means of a form fit.

8. Electrical/electronic installation device according to one of Claims 1 to 7, **characterized in that** the functional module (60) comprises an input element (92), which is designed in such a way that the input element (92) acts on the actuating member (90) upon actuating by a user in order to actuate the actuating element (13), wherein the actuating member (90) is preferably rigidly connected to the input element (92), more preferably the actuating member (90) is formed in one piece with the input element (92).

9. Electrical/electronic installation device according to Claim 6, **characterized in that** the functional module (60) comprises a contact bridge, which electrically conductively connects the third pole (82) to the fourth pole (84).

10. Electrical/electronic installation device according to Claim 6, **characterized in that** the functional module (60) comprises a second switching element (88), which is electrically conductively connected to the third pole (82) and the fourth pole (84) .

11. Electrical/electronic installation device according to Claim 10, **characterized in that** the second switching element (88) is an electromechanical switching element, preferably a relay.

## Revendications

1. Appareil d'installation électrique/électronique, comprenant un module de réception (10) et un module fonctionnel (60), le module fonctionnel (60) étant reçu dans le module de réception (10),
le module de réception (10) étant adapté pour être immobilisé dans une prise d'installation,
le module de réception (10) comprenant un premier élément de commutation (12), un dispositif de connexion (14), un premier pôle (20), un deuxième pôle (22) et un premier boîtier (30) qui forme un espace de réception (32) dans lequel est reçu le module fonctionnel (60),
le premier élément de commutation (12) et le dispositif de connexion (14) étant disposés dans le premier boîtier (30),
le dispositif de connexion (14) comprenant au moins deux équipements de connexion (16, 18, 19) pour connecter respectivement un conducteur d'une installation électrique, notamment au moins un premier équipement de connexion (16) et un deuxième équipement de connexion (18),
le premier élément de commutation (12) étant relié de manière électriquement conductrice d'une part au premier pôle (20) et d'autre part au premier équipement de connexion (16),
le deuxième pôle (22) étant relié au deuxième équipement de connexion (18),
le module fonctionnel (60) comprenant un deuxième boîtier (70) et un élément de connexion électrique (62) disposé sur le deuxième boîtier (70),
l'élément de connexion électrique (62) étant relié au premier pôle (20) et au deuxième pôle (22),
le premier pôle (20) et le deuxième pôle (22) étant réalisés et disposés de telle sorte que l'élément de connexion électrique (62) est relié de manière électriquement conductrice au premier pôle (20) et au deuxième pôle (22), et
le premier élément de commutation (12) comprenant un élément d'actionnement (13) qui est disposé et réalisé de telle sorte qu'il peut être actionné par un organe d'actionnement (90) disposé sur le module fonctionnel (60).

2. Appareil d'installation électrique/électronique selon la revendication 1, **caractérisé en ce que** le premier élément de commutation (12) est un commutateur mécanique.

3. Appareil d'installation électrique/électronique selon l'une quelconque des revendications 1 ou 2, **caractérisé en ce que** le premier boîtier (30) comprend un creux (34) qui débouche sur l'espace de réception (32), le premier pôle (20) et/ou le deuxième pôle (22) étant disposés dans le creux (34), le creux (34) s'étendant de préférence substantiellement dans un sens de montage (E) du module fonctionnel (60).

4. Appareil d'installation électrique/électronique selon l'une quelconque des revendications 1 à 3, **caractérisé en ce que** le premier boîtier (30) comprend en outre un premier moyen d'arrêt (36) pour immobiliser le module fonctionnel (60) dans l'espace de réception (32), le premier moyen d'arrêt (36) retenant de préférence le module fonctionnel (60) dans l'espace de réception (32) par complémentarité de forme.

5. Appareil d'installation électrique/électronique selon l'une quelconque des revendications 1 à 4, **caractérisé en ce que** le module de réception (10) comprend un actionneur (11) qui est disposé et réalisé pour ouvrir et/ou fermer le premier élément de commutation (12) à l'aide d'un signal de commande.

6. Appareil d'installation électrique/électronique selon l'une quelconque des revendications 1 à 5, **caractérisé en ce que** l'élément de connexion électrique (62) comprend un troisième pôle (82) et un quatrième pôle (84) qui s'étendent respectivement approximativement dans un sens de montage (E) du module fonctionnel (60), de préférence en s'éloignant du deuxième boîtier (70).

7. Appareil d'installation électrique/électronique selon la revendication 4, **caractérisé en ce que** le deuxième boîtier (70) comprend un deuxième moyen d'arrêt (72) qui coopère avec le premier moyen d'arrêt (36) pour retenir le module fonctionnel (60) dans le module de réception (10), de préférence par complémentarité de forme.

8. Appareil d'installation électrique/électronique selon l'une quelconque des revendications 1 à 7, **caractérisé en ce que** le module fonctionnel (60) comprend un élément d'entrée (92) qui est réalisé de telle sorte que lorsqu'il est actionné par un utilisateur, l'élément d'entrée (92) agit sur l'organe d'actionnement (90) pour actionner l'élément d'actionnement (13), l'organe d'actionnement (90) étant de préférence relié rigidement à l'élément d'entrée (92), l'organe d'actionnement (90) étant en outre de préférence réalisé d'un seul tenant avec l'élément d'entrée (92) .

9. Appareil d'installation électrique/électronique selon la revendication 6, **caractérisé en ce que** le module fonctionnel (60) comprend un pont de contact qui relie de manière électriquement conductrice le troisième pôle (82) au quatrième pôle (84).

10. Appareil d'installation électrique/électronique selon la revendication 6, **caractérisé en ce que** le module fonctionnel (60) comprend un deuxième élément de commutation (88) qui est relié de manière électriquement conductrice au troisième pôle (82) et au quatrième pôle (84).

11. Appareil d'installation électrique/électronique selon la revendication 10, **caractérisé en ce que** le deuxième élément de commutation (88) est un élément de commutation électromécanique, de préférence un relais.
